Europäisches Patentamt

**European Patent Office**

**Office européen des brevets**

(11) Publication number: **0 202 924**
**A2**

(12) # EUROPEAN PATENT APPLICATION

(21) Application number: **86303841.0**

(22) Date of filing: **21.05.86**

(51) Int. Cl.⁴: **A 63 B 49/10**

(30) Priority: **21.05.85 GB 8512774**

(43) Date of publication of application:
**26.11.86 Bulletin 86/48**

(84) Designated Contracting States:
**DE FR IT SE**

(71) Applicant: **DIVERSIFIED PRODUCTS CORPORATION**
**309 Williamson Avenue**
**Opelika, AL 36801(US)**

(72) Inventor: **Mott, Jonathan C.**
**Old Forge Cottage The Common**
**Wonersh Nr. Guildford Surrey, GU5 OPJ(GB)**

(74) Representative: **Stoole, Brian David**
**Schlumberger Electronics (U.K.) Limited 124 Victoria Road**
**Farnborough Hampshire GU14 7PW(GB)**

(54) **Racquet frame with stringing-holes and method for making same.**

(57) A method of making a fiber-reinforced molded racquet frame is disclosed. The method comprises: placing a core including a tube comprising at least one layer of woven reinforcing fibers in a mold shaped to define the frame; providing, as a portion of the mold, a plurality of side-action devices each including at least one needle-like projection; closing the mold; piercing with the projections the weave of the woven reinforcing fibers and the remainder of the core and extending the projections across the mold cavity to define respective stringing-holes passing radially through the mold frame; and injecting a plastics material into the mold around the core and the needle-like projections. A mold for use in the method is also disclosed.

FIG. 1

RACQUET FRAME WITH STRINGING HOLES AND
METHOD FOR MAKING SAME

TECHNICAL FIELD

This invention relates to racquets for use in games such as tennis, squash, racquetball and the like. The invention is more particularly concerned with methods of making fiber-reinforced molded racquet frames.

BACKGROUND OF THE INVENTION

It is known to mold racquet frames in fiber-reinforced thermoplastics material, with the fiber reinforcement taking the form of continuous filamentary material woven into a fabric or braid. However, currently available methods of producing such molded racquet frames suffers from a number of disadvantages. In particular it is both difficult and time-consuming to provide frames molded by these methods with stringing holes.

SUMMARY OF THE INVENTION

It is therefore an object of the present invention to provide methods of making fiber-reinforced molded racquet frames in which this particular disadvantage is alleviated.

According to one aspect of the invention, there is provided a method of making a fiber-reinforced molded racquet frame, the method comprising: placing a core including a tube comprising at least one layer of woven reinforcing fibers in a mold shaped to define the frame; providing, as a portion of the mold, a plurality of side-action devices each including at least one needle-like projection; closing the mold; piercing with the projections the weave of the woven reinforcing fibers and the remainder of the core and extending the projections across the mold cavity to define respective stringing-holes passing radially through the molded frame; and injecting a plastics material into the mold around the core and the needle-like projections.

In a preferred embodiment of the invention, the plastics material has a relatively low setting temperature and a relatively low viscosity, such as a methacrylate-based resin.

Advantageously, the core comprises a plastics foam core member, preferably an extruded polyethylene foam core member, disposed inside the tube of reinforcing fibers, in which case the method can advantageously further include the step of weaving the tube of reinforcing fibers, preferably in the form of a braid, around the core member.

The reinforcing fibers can be carbon fibers, boron fibers, glass fibers, silicon carbide fibers, ceramic fibers, or aramid fibers of the kind available under the trade name Kevlar, or any combination of these.

According to another aspect of the invention, there is provided a mold for molding a racquet frame, the mold comprising:

a principal mold member;

a plurality of side-action devices each slidable with respect to the principal mold member from a first open position to a second closed position, the principal mold member and the side-action devices together forming a mold cavity shaped to define a substantial part of the head of the racquet frame in the second position;

the principal mold member and the side-action devices each having first surface portions defining respective parts of the radially inwardly and outwardly facing surfaces of the part of the head; and

the side-action devices each having at least one sharply pointed projection projecting from their respective first surface portions, said projections extending across the mold cavity into respective recesses in the first surface portion of the principal mold member when the side-action devices are in the second position.

0202924

Advantageously, the first surface portion of the principal mold member defines the radially inwardly facing surface of the part of the head, while the respective first surface portions of the side-action devices together define the radially outwardly facing surface of the part of the head.

In a preferred embodiment of the invention, the principal mold member comprises first and second mold plates detachably secured together. In this case, the first surface portion of the principal mold member is preferably on the first mold plate, and the second mold plate preferalby has a surface portion which defines one of the surfaces of the part of the head which faces generally perpendicularly to the plane of the head. Furthermore, the first mold plate preferably has another surface portion which defines the other of the generally perpendicularly facing surfaces of the part of the head. Additionally, the mold plates preferably have spaced parallel surfaces which surround the mold cavity and between which the side-action devices are slidably located. Advantageously, each side-action device engages guide means, for example a groove, provided in at least one of the spaced parallel surface of the mold plates to constrain the side-action device to move parallel to the axis of its projection.

Conveniently, each of said side-action devices has a plurality of the projections extending parallel to each other.

The invention also includes racquet frames made by method in accordance with the first aspect of the invention, particularly in molds in accordance with the second aspect of the invention, and racquets incorporating such frames.

BRIEF DESCRIPTION OF THE DRAWINGS

The invention will now be described, by way of example only, with reference to the accompanying drawings, of which:

Figure 1 is a partially cut-away perspective view of part of a mold in accordance with the present invention, for use in making a racquet frame by a method also in accordance with the present invention;

Figure 2 is a partially cut-away plan view of part of the mold of Figure 1, showing the mold in the process of being closed;

Figure 3 is a more detailed view of part of the mold of Figure 1; and

Figure 4 is a side view of a part of a racquet made in the mold of Figures 1 and 3, showing a stringing hole.

DETAILED DESCRIPTION OF THE INVENTION

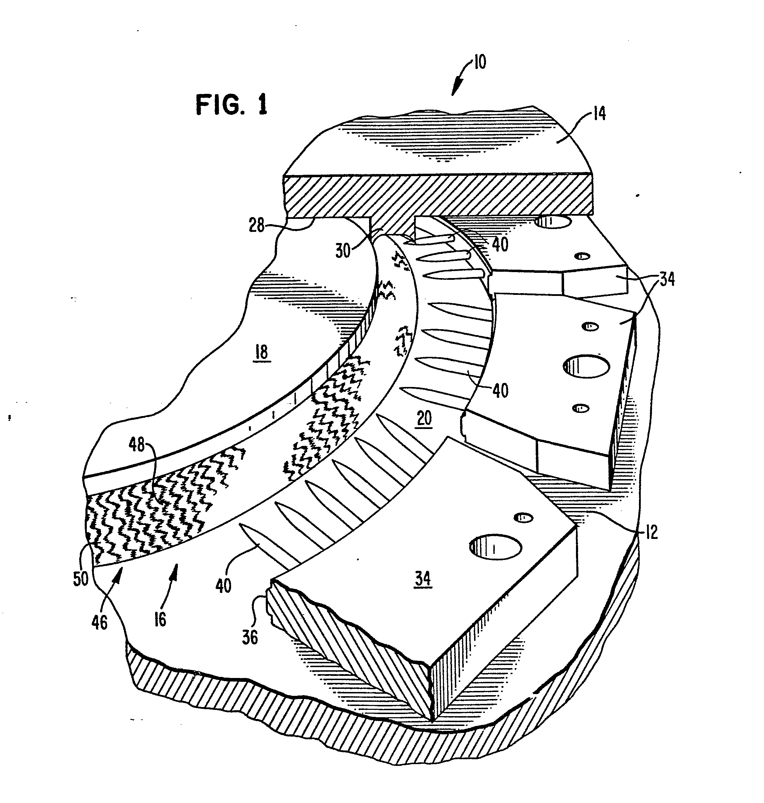

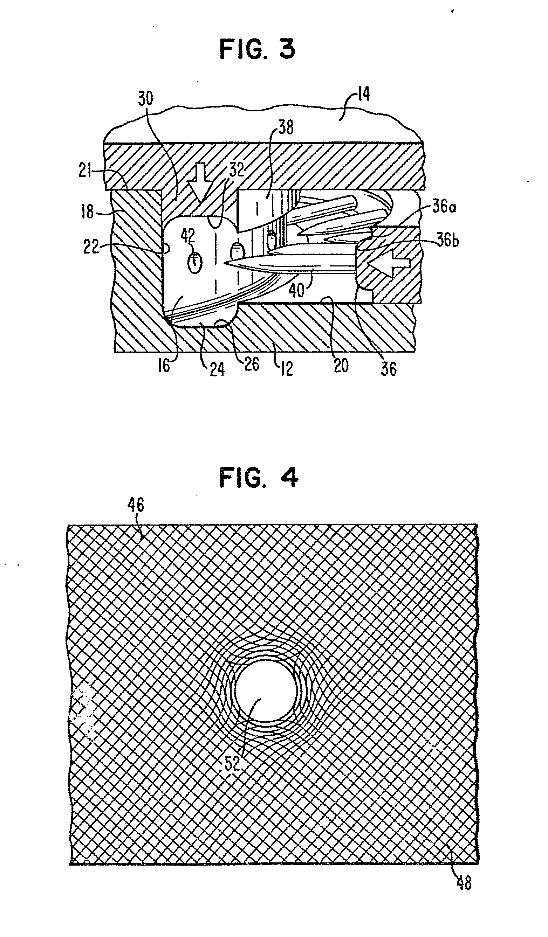

The mold shown in Figures 1 and 3 is indicated generally as 10. Mold 10 includes a principal mold member, comprising first and second mold plates 12 and 14, respectively, and a plurality of side-action devices 34. Mold plates 12, 14 are detachably secured together to form slightly more than three quarters of the cross-sectional circumference of an approximately rectangular section annular mold cavity 16, as can be seen most clearly in Figure 3. The complete annular mold cavity 16 defines the whole head of the racquet frame, and communicates with a further cavity (not shown) defined between the plates 12, 14. The further cavity extends radially of the head defined by the cavity 16 and defines the handle portion of the racquet frame.

The first (or lower) mold plate 12 comprises a generally oval central portion 18 which projects upwardly from a generally flat surrounding surface 20. Central portion 18 has a flat upper surface 21, and a side wall 22. Side wall 22 forms a first surface portion of cavity 16, which surface portion defines the radially inwardly facing surface of the head of the racquet frame. A shallow recess 24 is formed in the part of surface 20 immediately surrounding side wall 22. A base 26 of recess 24 forms that part of cavity 16 which defines one of the surfaces of the head of the racquet frame facing generally perpendicularly to the plane of the frame.

The second (or upper) mold plate 14 has a flat, downwardly facing, central surface portion 28, which mates with the flat upper surface 21 of central portion 18 of lower mold plate 12. Central surface portion 28 is surrounded by a downwardly projecting annular

0202924

projection 30, whose lower surface 32 forms that part of the cavity 16 which defines the other of the surfaces of the head of the racquet frame facing generally perpendicularly to the plane of the frame.

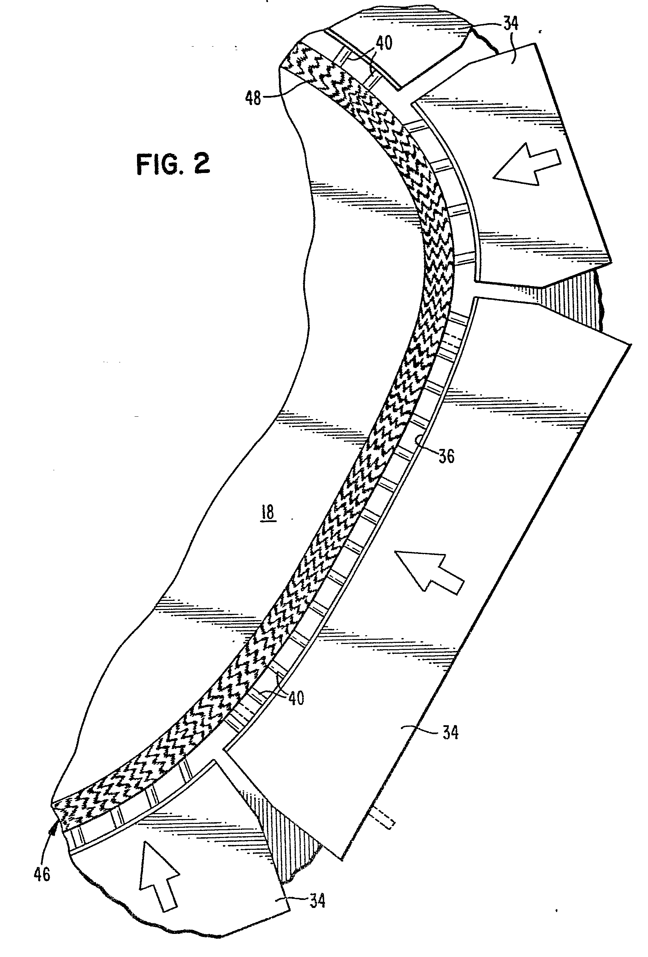

Side-action devices 34 are slidably supported on the surface 20 of lower mold plate 12 so as to be inwardly slidable towards recess 24. The respective lower surfaces of side-action devices 34 each have a respective downwardly projecting rectangular-section portion, which engages in a respective rectangular-section groove in surface 20 in order to precisely define the respective direction in which each of the devices 34 can slide on the surface 20. Mating rectangular-section portions and grooves are shown diagramatically in dash line in Figure 2 along one of the side-action devices. Side-action devices 34 each have respective side surfaces 36 which face towards side wall 22 of central portion 18..

In use, side-action devices 34 are all moved radially inwardly from a first, retracted or open position, towards recess 24, the direction of this inward movement being guided by the aforementioned grooves in the surface 20, until they reach a second closed position in which the upper parts 36a of their side surfaces 36 abut outer surface 38 of downward projection 30 of upper mold plate 14. At this point, all the side-action devices 34 abut each other, and mold cavity 16 is effectively closed, aside from its communication with the aforementioned handle cavity and with various feeder ports (not shown). The remaining parts 36b of the surfaces 36 then form the part of the wall of the mold cavity 16 defining the radially outwardly facing surface of the racquet frame.

As can be seen in the Figures, the respective surface parts 36b of surfaces 36 of side-action devices 34 are each provided with a plurality of sharply pointed needle-like projections 40, which extend perpendicularly from their respective surface parts 36b. It will be appreciated, therefore, that all projections 40 of any given side-action device 34 extend parallel to each other. Projections 40 also extend parallel to the respective groove in the surface 20 serving to guide their side-action device 34, thus ensuring that the projections move precisely in the direction in which they are pointing. Side wall 22 of central portion 18 of lower mold plate 12 is provided with a plurality of recesses 42 each positioned and aligned to receive a respective one of the projections 40 when side-action devices 34 reach the second position.

In order to mold a fiber-reinforced racquet frame in the mold 10, a core 46 formed of a multi-layer tubular braid 48 of reinforcing fibers woven onto an extruded polyethylene foam core member 50 is laid into recess 24 in lower mold plate 12, while side-action devices 34 are in their fully retracted positions, as shown in Figure 1. Core 46 is produced as described in United Kingdom Patent Application No. 8506351. Side-action devices 34 are then moved radially inwardly, so that their respective sharply pointed projections 40 penetrate first the weave of the radially outer wall of tubular braid 48, then the core member 50, and finally the radially inner wall of tubular braid 48, before entering their respective recesses 42. Because projections 40 are sharply pointed, they part the fibers of the weave of braid 48 relatively easily, and without damaging them.

Once side-action devices 34 reach their respective second positions, and mold 10 is effectively closed, a low viscosity, low temperature setting plastics material in the form of a methacrylate-based resin is injected into mold cavity 16 under pressure, exactly as described in the aforementioned patent application. This plastics material penetrates the weave of the reinforcing fibers of braid 48 as described in the aforementioned patent application and then sets around the projections 40, thereby defining stringing holes 52 passing radially through the molded frame.

After the setting of the plastics material, side-action devices 34 are retracted, the molded frame is removed from mold 10, and its surface is given any necessary (but minimal) surface finishing. A

0202924

suitable grip (not shown) is then fitted to the handle part (also not shown), and the racquet is then strung via stringing holes 52. It will be appreciated that the parted fibers of the braid 48 surround these holes 52, as shown in Figure 4, ensuring that the presence of the holes does not significantly weaken the molded frame of the racquet.

Many modifications can be made to the above-described method of making the racquet frame. For example, reinforcing fibers other than carbon and Kevlar can be used, e.g., glass fibers, silicon carbide fibers, ceramic fibers or boron fibers, either on their own or in combination with each other. Various different weaving patterns can also be used, to produce different visual effects or patterns in the surface of the finished frame. Also, other suitable low temperature curing, low viscosity resins or like plastics materials can be used in place of the methacrylate resin, or, indeed, even a thermosetting plastics material. Finally, the mold 10 can take many forms other than that specifically described, as long as it retains movable sharply pointed projections similar to projections 40.

CLAIMS

1.     A method of making a fiber-reinforced molded racquet frame, the method comprising:

placing a core including a tube comprising at least one layer of woven reinforcing fibers in a mold shaped to define the frame;

providing, as a portion of the mold, a plurality of side-action devices each including at least one needle-like projection;

closing the mold;

piercing the weave of the woven reinforcing fibers and the remainder of the core with the projections and extending the projections across the mold cavity to define respective stringing-holes passing radially through the molded frame; and

injecting a plastics material into the mold around the core and the needle-like projections.

2.     A method as claimed in claim 1, wherein the plastics material has a relatively low setting temperature and a relatively low viscosity.

3.     A method as claimed in claim 2, wherein the plastics material is a methacrylate-based resin.

4.     A method as claimed in any preceding claim wherein, the core comprises a plastics foam core member disposed inside the tube of reinforcing fibers.

5.     A method as claimed in claim 4, wherein said foam is polyethylene foam.

6.     A method as claimed in claim 4 or 5, further including the step of weaving the tube of reinforcing fibers around the core member.

7.     A method as claimed in claim 5, wherein the tube is woven as a braid.

8.     A method as claimed in any preceding claim, wherein the reinforcing fibers are selected from the group consisting of carbon fibers, boron fibers, glass fibers, silicon carbide fibers, ceramic fibers, or aramid fibers of the kind available under the trade name Kevlar, and combinations thereof.

9. A mold for molding a racquet frame, the mold comprising:

a principal mold member,

a plurality of side-action devices each slidable with respect to said principal mold member from a first open position to a second closed position, said principal mold member and the said side-action devices together forming a mold cavity shaped to define a substantial part of the head of the racquet frame in the second position;

said principal mold member and said side-action devices each having first surface portions defining respective parts of the radially inwardly and outwardly facing surfaces of said part of the head; and

said side-action devices each having at least one sharply pointed projection projecting from their respective first surface portions, said projections extending across the mold cavity into respective recesses in said first surface portion of said principal mold member when said side-action devices are in the second position.

10. A mold as claimed in claim 9, wherein said first surface portion of said principal mold member defines the radially inwardly facing surface of said part of the head, and said first surface portions of the side-action devices together define the radially outwardly facing surface of said part of the head.

11. A mold as claimed in claim 10, wherein said principal mold member comprises first and second mold plates detachably secured together.

12. A mold as claimed in claim 11, wherein said first surface portion of said principal mold member is on said first mold plate, and said second mold plate has a surface portion which defines one of the surfaces of said part of the head which faces generally perpendicularly to the plane of the head.

13. A mold as claimed in claim 12, wherein said first mold plate has another surface portion which defines the other of said generally perpendicularly facing surfaces of said part of the head.

14. A mold as claimed in any one of claims 11 to 13, wherein said mold plates also have spaced parallel surfaces which surround the mold cavity and between which said side-action devices are slidably located.

15. A mold as claimed in any one of claims 11 to 14, wherein each side-action device engages guide means provided in at least one of said spaced parallel surfaces of said mold plates to constrain the side-action to move parallel to the axis of its projection.

16. A mold as claimed in any one of claims 9 to 15, wherein each of said side-action devices has a plurality of said projections extending parallel to each other.

17. A racquet frame made by the method of any one of claims 1 to 8.

18. A racquet frame according to claim 17 and made in a mold in accordance with any one of claims 9 to 16.

19. A racquet incorporating a racquet frame in accordance with claim 17 or claim 18.

**FIG. 1**

2/3

FIG. 2

## FIG. 3

## FIG. 4